(19) Europäisches Patentamt
European Patent Office
Office européen des brevets

(11) Veröffentlichungsnummer: **0 150 718**
**A2**

(12) # EUROPÄISCHE PATENTANMELDUNG

(21) Anmeldenummer: **85100114.9**

(22) Anmeldetag: **07.01.85**

(51) Int. Cl.⁴: **E 21 B 43/25**, E 21 B 43/22

(30) Priorität: **18.01.84 DE 3401486**

(43) Veröffentlichungstag der Anmeldung: **07.08.85**
**Patentblatt 85/32**

(84) Benannte Vertragsstaaten: **AT DE FR GB NL**

(71) Anmelder: **BAYER AG, Konzernverwaltung RP**
**Patentabteilung, D-5090 Leverkusen 1 Bayerwerk (DE)**

(72) Erfinder: **Oberkirch, Wolfgang, Dr.,**
**Gregor-Mendel-Strasse 8, D-5090 Leverkusen 1 (DE)**
Erfinder: **de Montigny, Armand, Dr.,**
**Walter-Flex-Strasse 17, D-5090 Leverkusen 1 (DE)**
Erfinder: **Botsch, Hansjürgen, Dr., Saarstrasse 41,**
**D-5090 Leverkusen 1 (DE)**

(54) **Verfahren und Mittel zur Verhinderung von Erdöllagerstättenblockierungen durch Emulsionsbildung aufgrund von Asphaltenabscheidungen.**

(57) Die vorliegende Erfindung betrifft ein Verfahren zur Verhinderung von Erdöllagerstättenblockierungen, die durch Asphaltenabscheidungen hervorgerufen werden sowie ein dafür geeignetes Mittel auf Basis wasserlöslicher Polyorganosiloxan – Polyoxyalkylen – Blockmischpolymerisaten.

EP 0 150 718 A2

BAYER AKTIENGESELLSCHAFT 5090 Leverkusen, Bayerwerk
Konzernverwaltung RP
Patentabteilung Br/ABc 17. Jan. 1984

# Verfahren und Mittel zur Verhinderung von Erdöllagerstättenblockierungen durch Emulsionsbildung aufgrund von Asphaltenabscheidungen

Die vorliegende Erfindung betrifft ein Verfahren zur Verhinderung von Erdöllagerstättenblockierungen, hervorgerufen durch Asphaltenabscheidungen sowie ein dafür geeignetes Mittel auf Siliconbasis.

Erdöle enthalten außer ihren Hauptbestandteilen, den Kohlenwasserstoffen, regelmäßig in wechselnden Konzentrationen Nichtkohlenwasserstoffe, insbesondere Schwefel-, Sauerstoff- und Stickstoffverbindungen. Die stärker polaren Bestandteile dieser nicht polaren Kohlenwasserstoffe assoziieren zu den kolloidal dispersen Asphaltenen und Erdölharzen. Somit ist das Erdöl eine mizellare Lösung. Die Mizellen können an Öl-Wasser-Grenzflächen ausflocken und eine Wasser-in Öl-Emulsion stabilisieren.

Es ist bekannt, daß durch Einpressen von Flutwasser in den Porenraum einer Lagerstätte der Entölungsgrad erhöht werden kann (vgl. z.B. Enhanced Oil Recovery, Edited by M.M. Schumacher, Noyes Data Corp. Park Ridge N.J. 1978, S. 17-30 u. dort zitierte Literatur).

Bei asphaltenreichen Erdölen können sich bei der Injektion von Flutwasser im Porenraum der Lagerstätte stabile Wasser-in Öl-Emulsionen bilden, die wegen ihrer verglichen mit dem Öl und dem Wasser höheren Viskosität einen Fließwiderstand darstellen, so daß der Einpreßdruck für das Flutwasser erhöht werden muß. Dies ist nur maximal bis zum Frac-Druck des Gesteins möglich.

In der Regel führt diese Emulsionsbildung zu einem Absinken der Injektionsrate.

Als einzige Maßnahme zur Überwindung dieser durch Blocking auftretenden Fließwiderstände ist bisher nur die Erhöhung des Einpreßdruckes bekannt, die jedoch durch den Frac-Druck begrenzt ist. Oberhalb dieses Druckes kommt es zu Rißbildungen in der Formation, die vermieden werden müssen.

Die Konditionierung von Flutwässern bei der Erdölgewinnung durch Einsatz von Chemikalien ist bekannt und wird regelmäßig durchgeführt. Insbesondere werden Sauerstoffänger, Bakterizide, Korrosionsinhibitoren, Scale-Inhibitoren, Polyelektrolyte, Chelatbildner und gelegentlich auch Netzmittel verwendet (vgl. z.B. Chemicals for Oilfield Operations, Edited by J.I. Distasio, Noyes Data Corp. Park Ridge N.J. 1981 und dort zitierte Literatur).

Nicht bekannt ist der Zusatz von Stoffen, die eine Asphaltenabscheidung inhibieren und damit die Emulsionsbildung im Porenraum verhindern.

Es wurde nun gefunden, daß bestimmte wasserlösliche modifizierte Polysiloxane die Bildung von Emulsionen, die durch ausgefallene Asphaltene an der Grenzfläche Öl-Wasser stabilisiert sind, sicher verhindern. Als wasserlöslich modifizierte Polysiloxane kommen Polyorganopolysiloxan-Polyoxyalkylen-Blockmischpolymerisate der allgemeinen Formel

$$[R^1\,Si(OSiR_2)_{n-}]_m\,Z_{m-1}\,(OR^2)_{m+2}$$

in Frage.

In der allgemeinen Formel bedeuten

R eine Alkylgruppe mit bis zu 4 C-Atomen,

$R^1$ den Substituenten R bzw. einen Phenylrest,

$R^2$ eine Gruppe der Zusammensetzung

$$R^3(OCH_2CH_2)_x(OCH_2-\underset{}{\overset{CH_3}{\overset{|}{C}}}H)_y-$$

Z eine difunktionelle Einheit wie -O- oder

$$-O\left[\begin{matrix} R^3 \\ | \\ -C \\ | \\ R^4 \end{matrix}\right]_p - O -$$

wobei

$R^3$ einen Kohlenwasserstoffrest mit bis zu 4 C-Atomen,

$R^4$ gleich oder verschieden ein Wasserstoffatom oder $R^3$,

n eine Zahl zwischen 3 und 30,

m eine Zahl zwischen 1 und 15,

x,y Zahlen, die jeweils so gewählt sind, daß bei vorgegebenem m, n und p die Verbindung wasserlöslich ist, wobei im Falle von y die Zahl 52 und im Falle von x und x+ die Zahl 68 nicht überschritten wird,

p eine Zahl von mindestens zwei, die jedoch den Wert nicht überschreitet, der die obige Verbindung - bei gegebenem m, n, x und y - wasserunlöslich macht,

bedeutet.

Die Herstellung der Verbindungen für die erfindungsgemäße Verwendung erfolgt nach bekannten Verfahren und ist in der EP-PS 25 822 beschrieben.

Zur Feststellung der Wirksamkeit der erfindungsgemäßen Verbindungen wurden Flutversuche mit asphaltenreichem Rohöl in sandgepackten linearen horizontalen Flutstrecken herangezogen. Die Verhältnisse in einer Lagerstätte wurden dadurch simuliert, daß die Flutstrecke

zunächst mit hochsalinarem Formationswasser gesättigt wurde, dieses Formationswasser bis auf die Haftwassersättigung verdrängt wurde und anschließend mit niedersalinarem Wasser (3 %ige NaCl-Lösung) geflutet wurde.

Bei Versuchen, das asphaltenreiche Rohöl ohne die erfindungsgemäßen Verbindungen auszufluten, wird ein sehr starker Druckaufbau beobachtet, der zu einer ständigen Steigerung des Injektionsdrucks zwingt, wobei der Druckgradient im Flutrohr ständig zunimmt und bis zu etwa 100 bar/m beträgt.

Zusätze gemäß der vorliegenden Erfindung sind geeignet, die Bildung von viskosen W/O-Emulsionen, wie sie beim Zusammentreffen des Flutwassers mit den asphaltenreichen Rohölen in einer Lagerstätte entstehen können, zu verhindern und damit gleichzeitig den gefürchteten Druckaufbau zu vermeiden.

Je nach Beschaffenheit des Rohöls sind Einsatzmengen des Zusatzes von wenigstens 5 ppm, bevorzugt jedoch von 30 bis 100 ppm bezogen auf die Flutwassermenge erforderlich, um den Anstieg des Druckgradienten auf $<1$ bar/m zu begrenzen. Diese Wirkung wird auch unter Temperatur- und Druckbedingungen beobachtet, die in einer realen Lagerstätte herrschen, z.B. Temperaturen um 90°C und Drucke bis 200 bar.

Die Erfindung wird durch das nachfolgende Beispiel näher beschrieben, ohne darauf beschränkt zu sein.

Beispiel

Eine 1 m lange fest eingerüttelte Sandpackung aus Quarzsand der Körnung 0,03 bis 0,15 mm mit einer Porosität von 40 ± 2 % wird mit 3 %iger NaCl-Lösung gesättigt. Anschließend wird dieses Wasser bis auf die Haftwassersättigung durch ein Rohöl mit einem Anteil an Asphaltenen von 12 % verdrängt. Dann wird mit einer 3 %igen NaCl-Lösung mit einer Flutgeschwindigkeit von 0,5 m/d geflutet, bis die gesamte Flutwassermenge von 1,5 l verbraucht ist.

Dem Flutwasser werden erfindungsgemäß zur Vermeidung eines Emulsionsblocks 60 ppm eines Polyetherpolysiloxans zugegeben, wobei gemäß der allgemeinen Formel

$$[R^1Si(OSiR_2)_{n}]_m \; Z_{m-1} \; (OR^2)_{m+2}$$

$m = 1$

$n = 20$

$R = R^1 = -CH_3$

$R^2 = R^3(OCH_2CH_2)_x \; (OCH_2CH(CH_3))_y$

$R^3 = C_4H_9$

$x = 15$

$y = 17$

bedeuten.

In einem Vergleichsversuch wird gleichermaßen ohne den erfindungsgemäßen emulsionsverhindernden Zusatz verfahren.
Die emulsionsverhindernde Wirkung ist aus Abb. 1 ersichtlich, in der das Produkt aus Druckdifferenz über die Rohrlänge (1m) = p und die Zeit als Funktion des injizierten Flutwasservolumens in ml aufgetragen ist. Ohne Zusatz erhält man den steil ansteigenden Kurvenverlauf, während durch den Zusatz der flache Kurvenverlauf bewirkt wird.

In der Abb. 1 stellt 1 die Kurve für eine NaCl-Lösung (3 Gew.-%) und 2 die Kurve für eine 3 gew.-%ige NaCl-Lösung mit 60 ppm der Substanz gemäß obigem Beispiel dar (60 ppm bezogen auf die gesamte injizierte Wassermenge).

## Patentansprüche

1. Mittel zur Verhinderung eines Druckanstiegs bei der Injektion von Flutwasser in Erdöllagerstätten, dadurch gekennzeichnet, daß es im wesentlichen aus Polyorganopolysiloxan-Polyoxyalkylen-Blockmischpolymerisaten der allgemeinen Formel

$$[\bar{R}^1Si(OSiR_2)_{n-}]_m \; Z_{m-1} \; (OR^2)_{m+2}$$

besteht, wobei die Reste R, $R^1$, $R^2$ und Z sowie die Indices m und n folgende Bedeutung haben:

R eine Alkylgruppe mit bis zu 4 C-Atomen,

$R^1$ den Substituenten R bzw. einen Phenylrest,

$R^2$ eine Gruppe der Zusammensetzung

$$R^3(OCH_2CH_2)_x(OCH_2-\overset{\displaystyle CH_3}{\overset{|}{C}H})_y-$$

Z eine difunktionelle Einheit -O- oder

$$-O-\left[\begin{matrix}R^3\\ |\\ C\\ |\\ R^4\end{matrix}\right]_p-O-$$

wobei

$R^3$ einen Kohlenwasserstoffrest mit bis zu 4 C-Atomen,

$R^4$ gleich oder verschieden ein Wasserstoffatom oder $R^3$,

n eine Zahl zwischen 3 und 30,

m eine Zahl zwischen 1 und 15,

x,y Zahlen, die jeweils so gewählt sind, daß bei vorgegebenem m, n und p die Verbindung wasserlöslich ist, wobei im Falle von y die Zahl 52 und im Falle von x und x+y die Zahl 68 nicht überschritten wird,

p eine Zahl von mindestens zwei, die jedoch den Wert nicht überschreitet, der die obige Verbindung - bei gegebenem m, n, x und y - wasserunlöslich macht,

bedeutet.

2. Mittel nach Anspruch 1, dadurch gekennzeichnet, daß

m eine Zahl von 1 bis 2,
n eine Zahl von 12 bis 22,
p eine Zahl von 2 bis 3,
x eine Zahl von 12 bis 31 und
y eine Zahl von 14 bis 28 ist.

3. Mittel nach einem der Ansprüche 1 oder 2, dadurch gekennzeichnet, daß im gleichen Molekül Polyether unterschiedlicher Struktur Anwendung finden.

4. Verfahren zur Verhinderung des Druckanstiegs bei der Injektion von Flutwasser in Erdöllagerstätten ohne Zugabe von Asphaltenabscheidung verhindernden Mitteln, dadurch gekennzeichnet, daß man den Flutwässern Polysiloxan-Polyoxyethylen-Mischpolymerisate gemäß einem der Ansprüche 1 bis 3 zusetzt.

5. Verwendung von Polysiloxan-Polyoxyalkylen-Mischpolymerisaten nach einem der Ansprüche 1 bis 3 zur Verhinderung des Druckansteigs bei der Injektion von Flutwasser in Erdöllagerstätten.

6. Verwendung nach Anspruch 5, dadurch gekennzeichnet, daß dem Flutwasser 30 bis 100 ppm des Polysiloxan-Polyoxyalkylen-Mischpolymerisats zugesetzt werden.

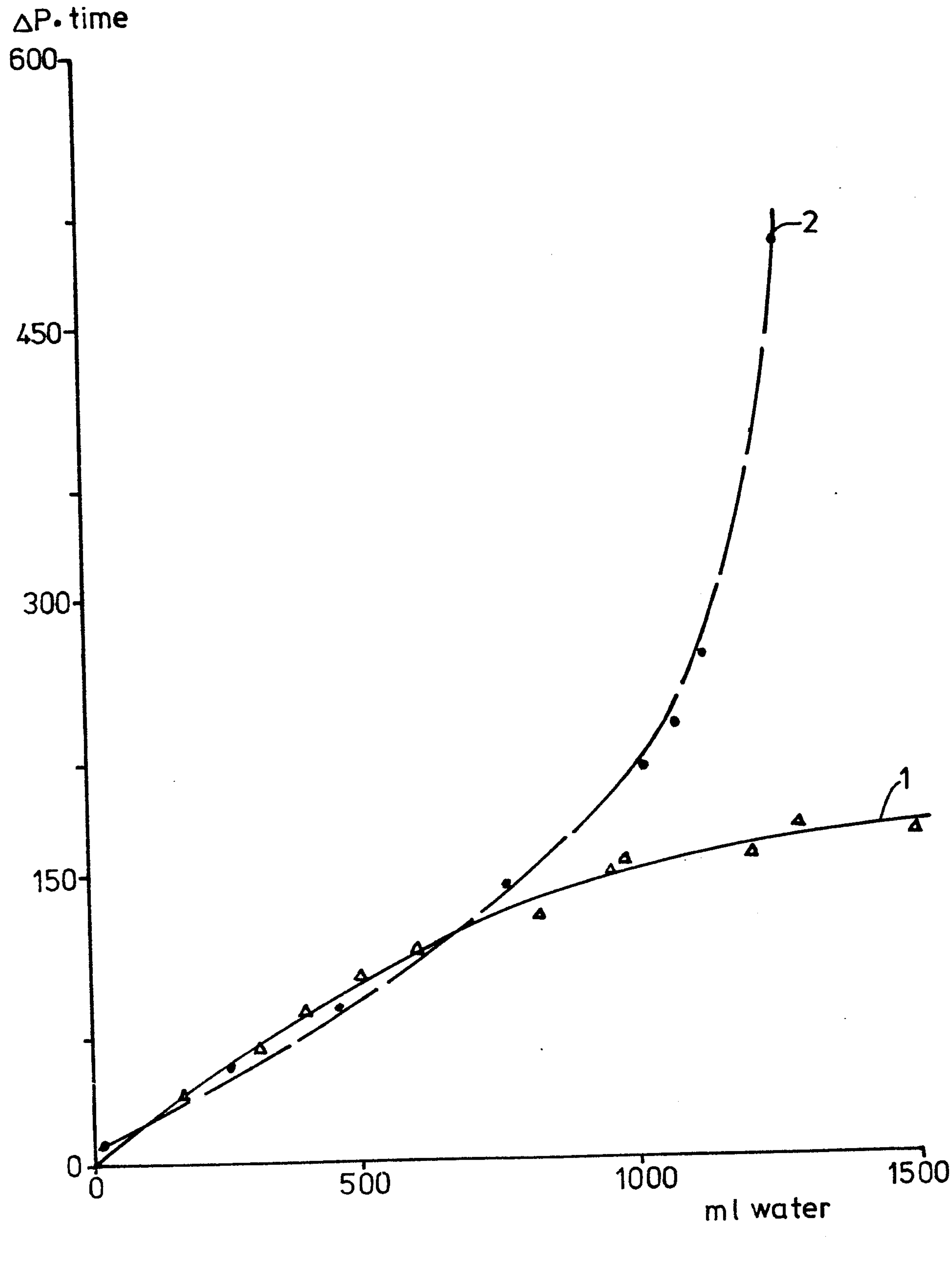
ΔP. time
600
450
300
150
0
0
500
1000
1500
ml water
1
2